# EUROPEAN PATENT APPLICATION

(11) **EP 4 501 761 A1**
(43) Date of publication of application: **05.02.2025**
(21) Application number: 22940356.3
(22) Date of filing: 30.05.2022
(51) Int. Cl.: B62H 3/08, B62H 3/02, B62K 3/00, B62J 45/00, B60L 53/38, H02J 50/90

(54) **CHARGING STATION FOR PERSONAL MOBILITY DEVICE**

(30) Priority: 27.04.2022 KR 20220051827
(71) Applicant: LG Electronics Inc., Yeongdeungpo-gu Seoul 07336 (KR)
(72) Inventor: KIM, Samyoup, Seoul 06772 (KR); JU, Jongkyu, Seoul 06772 (KR); KIM, Sungpil, Seoul 06772 (KR); PARK, Hyunghoon, Seoul 06772 (KR)
(74) Representative: Vossius & Partner Patentanwälte Rechtsanwälte mbB
(86) International application number: PCT/KR2022/007622
(87) International publication number: WO 2023/210862

(57) **Abstract**

**ABSTRACT:** A charging station for a personal mobility device, which is a station for receiving a personal mobility device including a front wheel, a rear wheel, and a charging module, comprises: a plurality of power transfer modules each of which includes a wireless transmission coil; a frame in which the plurality of power transfer modules are accommodated; a control unit which is mounted to the frame; and a wheel slope which is disposed at the frame and on which the front wheel of the personal mobility device is seated, wherein, when the front wheel of the personal mobility device is positioned on the wheel slope, the power transfer modules and the charging module come into contact with each other. The charging station can safely store personal mobility devices.

## Description

### TECHNICAL FIELD

The present disclosure relates to a charging station for personal mobility devices capable of simultaneously storing and charging a personal mobility device.

### BACKGROUND ART

A personal mobility device is a single-person means for transportation using electricity, which may include an electric wheel, an electric kickboard, an electric bicycle, and an ultra-compact electric vehicle.

The electric kickboard, which is often used as a personal mobility device, may include a skateboard-shaped body portion, a support bar extending upward from the body portion, a handle extending from opposite sides of the support bar, and wheels rotatably mounted to the body portion and the support bar.

A recent personal mobility device includes a motor configured to provide rotational power and a battery configured to supply power to the motor.

Conventionally, there is a problem that personal mobility devices are left on the street after use, which hinders the movement of pedestrians and vehicles. In addition, since the personal mobility devices cannot be charged immediately after use, personnel who collect the personal mobility devices for charging or replace the batteries is needed, resulting in difficulties in maintenance.

In order to solve this, charging stations have been studied, but a conventional station is a modular type station, in which only one personal mobility device is mounted, and therefore the stations must be assembled one by one on site, which requires installation time.

In addition, since the stations are installed individually, it is necessary to install a distribution box for each station separately and to connect the stations to each other by wiring on site, which is cumbersome, and the stations are installed individually and are easily damaged due to weak rigidity.

### DISCLOSURE

### TECHNICAL TASK

It is an object of the present disclosure to provide a charging station capable of simultaneously storing and charging a personal mobility device.

It is another object of the present disclosure to provide a charging station with a simplified structure to reduce installation and manufacturing costs.

It is a further object of the present disclosure to provide a charging station having a structure in which a charging module is in tight contact with a power transmission module when a personal mobility device is mounted in the station.

### TECHNICAL SOLUTIONS

The present disclosure provides a charging station for receiving a personal mobility device including a front wheel, a rear wheel, and a charging module, the charging station including a plurality of power transmission modules each including a wireless transmission coil, a frame configured to receive the plurality of power transmission modules, a controller mounted in the frame, and a wheel slope located at the frame, the wheel slope being configured to allow the front wheel of the personal mobility device to be seated thereon, wherein the power transmission module and the charging module are in contact with each other when the front wheel of the personal mobility device is located on the wheel slope.

The wheel slope may include a first inclined surface extending upward and a second inclined surface extending downward from the first inclined surface, and the power transmission module and the charging module may be in contact with each other when the front wheel of the personal mobility device is located on the second inclined surface.

The first inclined surface of the wheel slope may have a tapered shape with a large width at a lower part and a small width at an upper part.

The wheel slope may further include a sidewall formed at a side surface of each of the first inclined surface and the second inclined surface so as to obliquely extend upward and outward.

The power transmission module may include a module case configured to receive the transmission coil, a module box hingedly coupled to left and right sides of the module case, the module box being fixed to the frame, and an elastic portion located between a rear surface of a lower part of the module case and the module box, and when the personal mobility device is located on the second inclined surface, the elastic portion may be compressed and a front surface of the module case may be tilted downward.

When current in the transmission coil changes, the power transmission module may determine that the charging module is coupled in place and may provide a notification to a user.

The notification may be provided visually or audibly using one of a lamp located at an upper part of the frame and a speaker located at the power transmission module.

The power transmission module may further include a magnet coupled to a ferromagnetic body or a magnet located at the charging module of the personal mobility device.

The charging station may further include a stem holder located above the power transmission module, the stem holder being configured to receive a stem of the personal mobility device.

The frame may include an upper frame extending in a horizontal direction, the upper frame including a plurality of receiving portions configured to receive the power transmission modules, a pair of vertical frames located on opposite sides of the upper frame, and a lower frame configured to connect the pair of vertical frames to each other, the wheel slope being fixed to the lower frame.

The controller may include a control box located in the frame, an earth leakage breaker located in the control box, the earth leakage breaker being configured to detect earth leakage and cut off power, and a power distribution module configured to provide external power to the plurality of power transmission modules.

### ADVANTAGEOUS EFFECTS

A charging station for personal mobility devices according to the present disclosure may safely store personal mobility devices.

In addition, the present disclosure may facilitate the movement of pedestrians and vehicles, since the personal mobility devices are stored and on standby in a set place.

In addition, the charging station is capable of performing charging simultaneously with storage, whereby the need for separate collection may be eliminated, and batteries can be charged immediately, whereby the time available for use may be increased.

In addition, the charging station of the present disclosure has the advantage that a plurality of storage portions is integrated to secure rigidity and the charging station is easy to install.

In addition, since a power distribution unit is located in the station, the power distribution unit is not exposed to rain, etc., whereby the risk of electric shock is low and durability is excellent.

Effects obtainable from the present disclosure are not limited by the above mentioned effects, and other unmentioned effects can be clearly understood from the above description by those having ordinary skill in the technical field to which the present disclosure pertains.

### DESCRIPTION OF DRAWINGS

FIG. 1 is a perspective view showing a charging station according to an embodiment of the present disclosure.
FIG. 2 is an exploded perspective view showing the charging station according to the embodiment of the present disclosure.
FIG. 3 is a front view and a plan view showing embodiments of the charging station of the present disclosure.
FIG. 4 is a view showing the state in which a personal mobility device is mounted in the charging station according to the embodiment of the present disclosure.
FIG. 5 is an exploded view showing a power transmission module of the charging station according to the embodiment of the present disclosure and a charging module of a personal mobility device.
FIG. 6 is a side view and a sectional view showing the power transmission module of the charging station according to the embodiment of the present disclosure.
FIGs. 7 and 8 are views showing the state in which a personal mobility device is mounted in the charging station according to the embodiment of the present disclosure.
FIG. 9 is a view showing the flow of force by which the charging module of the personal mobility device comes into tight contact with the power transmission module of the charging station according to the embodiment of the present disclosure.
FIGs. 10 and 11 are views showing the disposition of the power transmission module and the charging module in the state in which the personal mobility device is mounted in the charging station according to the embodiment of the present disclosure.
FIG. 12 is a view showing a controller of the charging station according to the embodiment of the present disclosure.

### BEST MODE FOR DISCLOSURE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be used.

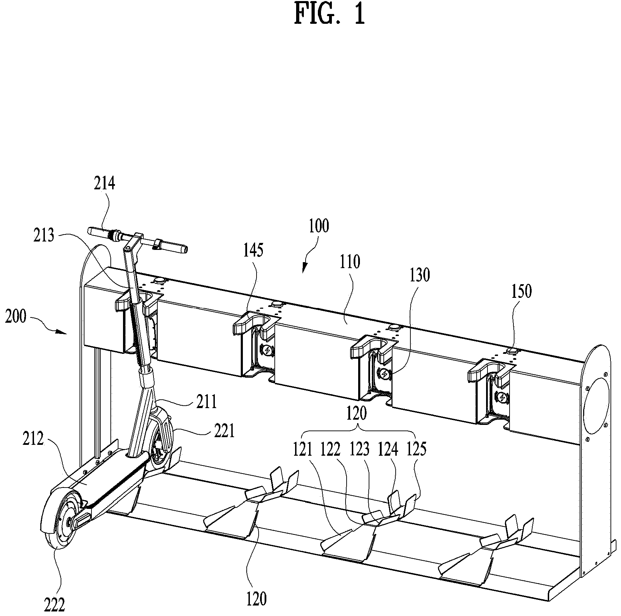

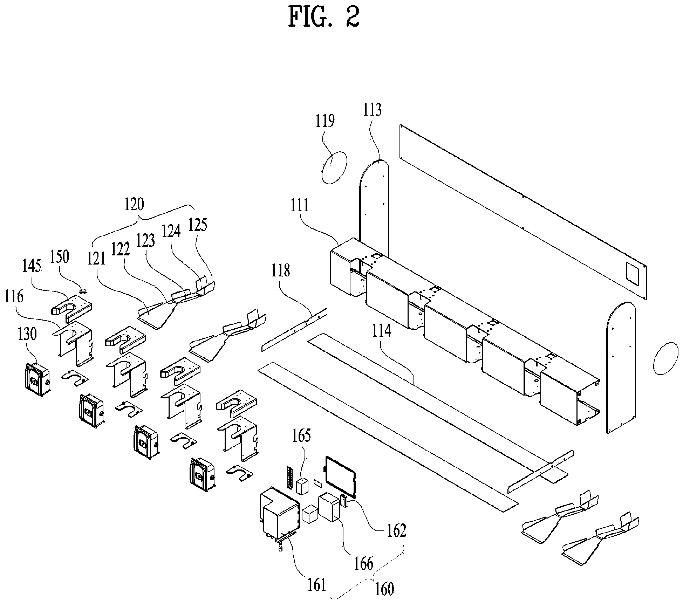

FIG. 1 is a perspective view showing a charging station 100 according to an embodiment of the present disclosure, and FIG. 2 is an exploded perspective view showing the charging station 100 according to the embodiment of the present disclosure.

The charging station 100 of the present disclosure is a charging station for charging a personal mobility device 200, wherein the personal mobility device 200 refers to a mobility device used by a single person and includes a shared mobility device.

While there are many types of personal mobility devices 200 depending on the number and disposition of wheels and the shape of a frame 110, the electric mobility device 200 receivable in the charging station 100 of the present disclosure includes a front wheel, a rear wheel 222, and a battery configured to provide power. For example, there is an electric kickboard or an electric bicycle.

The electric mobility device 200 includes a battery such that the electric mobility device is driven using electricity, and when the battery is depleted, the battery needs to be collected so as to be replaced or charged and installed again. Therefore, there is a problem that labor is consumed and when the battery is depleted, the battery cannot be used until the battery is collected and charged.

In addition, regulations on electric mobility devices 200 left on the roadside have recently been strengthened, resulting in laws and regulations restricting parking spaces for the electric mobility devices 200. There is a problem that the electric mobility devices 200 are easily tipped over and damaged by wind or external impact during parking.

Accordingly, the present disclosure provides a charging station 100 capable of charging an electric mobility device 200 while receiving the electric mobility device 200 in a designated space such that the electric mobility device 200 can be charged directly while the electric mobility device 200 is parked in a safe manner, thereby reducing labor costs.

Consequently, the electric mobility device received in the charging station 100 such that the battery can be charged may include a charging module 230.

As shown in FIG. 1, the charging station 100 of the present disclosure may receive a plurality of personal mobility devices 200. The personal mobility device 200 in the form shown in FIG. 1 is a kickboard type personal mobility device 200 including a first frame 211 including a stem 213 extending in a vertical direction and having a handle 214 located at an upper end and a front wheel 221 coupled to a lower end and a second frame 212 including a footrest having a rear wheel 222 coupled thereto.

In addition to the kickboard type personal mobility device, other forms of personal mobility devices, such as a bicycle, may also be received, but for convenience of description, the personal mobility device 200 will be described hereinafter on the basis of the electric kickboard type personal mobility device.

The charging station 100 of the present disclosure includes a power transmission module 130, a frame 110, a controller 160, and a wheel slope 120. The power transmission module 130 is connected to the charging module 230 of the personal mobility device 200 to charge the battery of the personal mobility device 200, wherein wired connection is possible, but the present embodiment may include a power transmission module 130 and a charging module 230 using a wireless charging method.

The frame 110 may include a lower frame 114 fixed to the floor, a vertical frame 113 extending from the lower frame 114 in the vertical direction, and an upper frame 111 connected to an upper part of the vertical frame 113 and extending in a horizontal direction, the upper frame being configured to allow a plurality of power transmission modules 130 to be located therein.

The plurality of power transmission modules 130 may be provided in the horizontally extending upper frame 111 to receive a plurality of personal mobility devices 200.

As receiving portions configured to receive the personal mobility devices 200 are integrally configured, it is advantageous in terms of durability, and it is possible to shorten the installation time by installing the personal mobility devices 200 at once without installing and connecting a plurality of stations successively.

For convenience of description, the direction shown in FIG. 1 is referred to as a front surface and the opposite direction is referred to as a rear surface. The front surface may include an opening to expose a plurality of power transmission modules 130.

The vertical frames 113 may be provided in a pair at opposite ends of the charging station 100 in the horizontal direction, as shown in FIG. 1, or may be further disposed between the respective receiving portions. An identification number or QR code 119 may be disposed on a side surface of the vertical frame 113 to identify the charging station 100.

The lower frame 114 may fix the frame 110 to the floor, and a wheel slope 120 on which the wheel of the personal mobility device 200 is seated may be mounted in the lower frame. The width of the lower frame 114 in a forward-rearward direction may be greater than that of the upper frame 111 for stable support.

The wheel slope 120 may have a predetermined width for the front wheel 221 of the personal mobility device 200 to be seated, and may include an inclined surface. The movement of the front wheel 221 along the inclined surface naturally serves to guide the personal mobility device 200 to be received in the charging station 100.

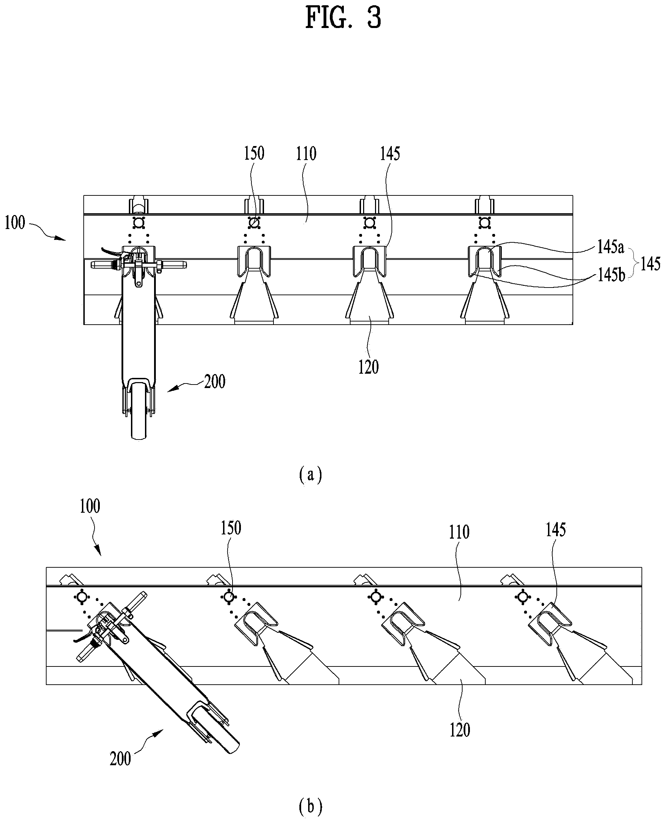

FIG. 3 is a plan view showing embodiments of the charging station 100 of the present disclosure. The wheel slope 120 may be disposed vertically, as shown in (a), or obliquely, as shown in (b). Depending on the size of the installation space, different types may be used.

(a) has a small width in the horizontal direction but a large length in the forward-rearward direction, which may be difficult to install if the width of a walkway is small. In this case, installing the wheel slope 120 obliquely as in (b) has the advantage that the length in the forward-rearward direction is decreased and the length of the personal mobility device 200 protruding from the charging station 100 is also less than in the embodiment of (a).

Since the disposition of the power transmission module 130 varies depending on the disposition of the charging station, the shape of an opening of the upper frame 111 may vary, and the horizontal length of each of the upper frame 111 and the lower frame 114 may also vary.

Since a second inclined surface 123 is related to the position of the power transmission module 130, the shape of the wheel slope 120 may also vary depending on the direction of disposition of the personal mobility device 200.

The wheel slope 120 of the present disclosure may include a first inclined surface 121, an apex 122, and a second inclined surface 123 in a direction from the front to the rear. The first inclined surface 121 may ascend from the front to the rear, the first inclined surface may be stopped at the apex 122, and the second inclined surface 123 may descend therefrom.

The first inclined surface 121 may have a tapered shape that is wide at the entrance and gradually narrows toward the apex to allow the front wheel 221 to move along the wheel slope 120.

The wheel slope 120 may have sidewalls 125 to prevent the front wheel 221 of the personal mobility device 100 from deviating from the wheel slope in a lateral direction. The sidewalls 125 may be formed by bending the wheel slope 120, as shown in Figure 2, or may be formed using the lower frame.

A coupling portion 124 extending farther rearward than the second inclined surface 123 to fix the wheel slope 120 to the lower frame 114 may be further included. Since the coupling portion 124 is located farther rearward than the second inclined surface 123, the front of the part of the front wheel in contact with the floor is located at the coupling portion.

Consequently, the sidewall 125 of the coupling portion 124 may protrude higher than the other portions, as shown in FIG. 2.

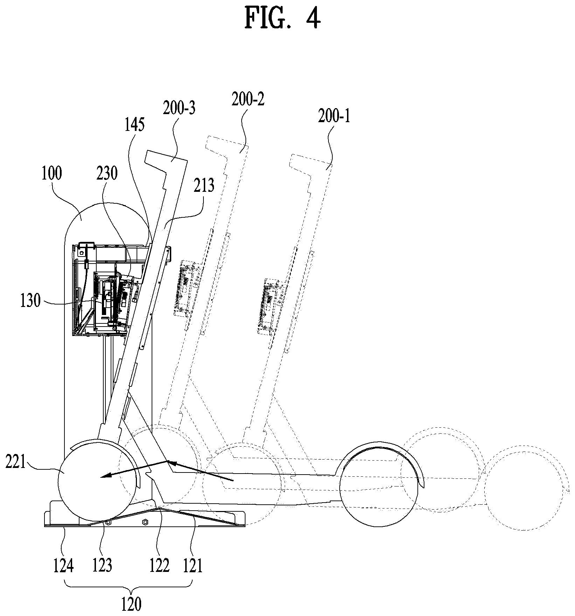

FIG. 4 is a view showing the state in which the personal mobility device 200 is mounted in the charging station 100 according to the embodiment of the present disclosure.

When a user pushes the personal mobility device 200 such that the front wheel 221 of the personal mobility device 200 rolls over the first inclined surface 121, the personal mobility device 200 moves from position 200-1 to position 200-2, and the front wheel 221 passes through the apex 122 of the wheel slope 120 roll along the second inclined surface 123. In the state in which the front wheel 221 is located on the second inclined surface 123, the charging module 230 of the personal mobility device 200 comes into contact with the power transmission module 130.

At this time, a stem holder 145 configured to hold the stem 213 such that the personal mobility device 200 does not tilt may be further provided. The stem holder may be located above the power transmission module 130 and may protrude farther than the power transmission module 130 in the forward direction.

The stem of the personal mobility device 200 is tilted as shown in FIG. 4, and the stem holder 145 may include a stem groove 145a and stem guides 145b protruding from the left and right sides of the stem groove 145a.

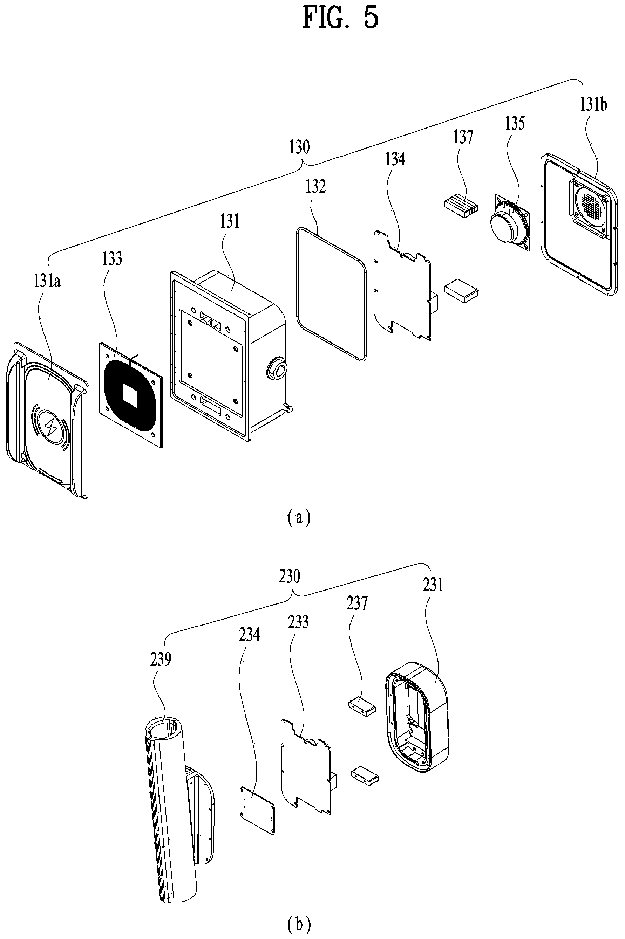

FIG. 5 is an exploded view showing the power transmission module 130 of the charging station 100 according to the embodiment of the present disclosure and the charging module 230 of the personal mobility device 200. (a) is an exploded view of the power transmission module 130 of the charging station 100, and (b) is an exploded view of the charging module 230 of the personal mobility device 200.

The power transmission module 130 and the charging module 230 may include coils for transmitting and receiving power, respectively, and may include a board portion 134 configured to control the same.

The power transmission module 130 includes a module case 131 and a transmission coil 133 and a board portion 134 mounted on the module case 131.

In the present embodiment, the transmission coil 133 may include a TX contact portion 131a mounted on a front surface of the module case 131 and in contact with the charging module 230 while covering the transmission coil 133. The TX contact portion 131a may include a guide protrusion configured to guide a charging coil 233 of the charging module 230 so as to be located in alignment with the transmission coil 133.

The module case 131 may further include a plurality of rear covers 131b and may be further provided with a waterproof member 132 for waterproofing between the rear covers 131b and the module case 131.

A speaker 135 may be further provided for notification as needed, and the speaker 135 may output a notification sound upon detecting touch of the charging module 230.

The power transmission module 130 may further include a magnet 137, which may be magnetically coupled to a magnet or a ferromagnetic body 237 of the charging module 230 such that the charging coil 133 of the charging module 230 can be fixed in place.

The charging module 230 shown in (b) may include a fixing bracket 239 fixed to the frame 110 of the personal mobility device 200 and a housing 231 configured to receive the charging coil 233 and the board portion 234.

However, the power transmission module 130 and the charging module 230 must be in tight contact for charging, and since the personal mobility device 200 is of various types, the angle of the stem to which the charging module 230 is fixed may vary from product to product. In addition, if the personal mobility device 200 is twisted when seated in the charging station 100 or if the floor on which the rear wheel 222 is located is tilted, the angle of the stem at the bottom surface varies.

In consideration of these situations, the power transmission module 130 may be configured to move within a predetermined range.

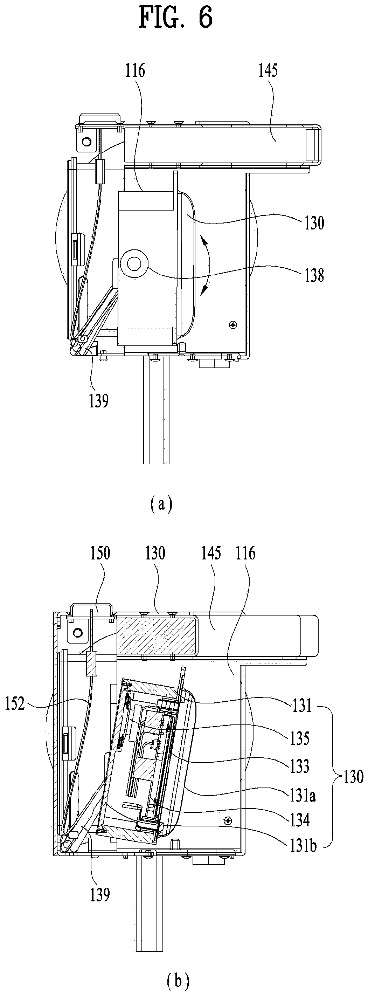

FIG. 6 is a side view and a sectional view showing the power transmission module 130 of the charging station 100 according to the embodiment of the present disclosure.

The difference in the horizontal position between the front wheel 221 and the charging module 230 located on the stem 213 may vary from one product to another, but the charging station 100 of the present disclosure does not specify the position of the front wheel 221, it is sufficient for the front wheel 221 to be located on the second inclined surface 123, and since the charging module 230 is received when the charging module comes into contact with the power transmission module 130, the position of the power transmission module 130 in the forward-rearward direction does not need to change.

However, the power transmission module may be configured to rotate about a horizontal axis to adjust the tilted angle. The module case 131 may include a pivoting shaft 138 protruding from opposite side surfaces, and may further include a module box 116 to which the pivoting shaft 138 is coupled and in which the power transmission module 130 is received.

The module box 116 is a basket-shaped member inserted into the opening in the upper frame 111, wherein a front surface of the module box is open and the power transmission module 130 is located in a rear part of the module box. The rotation axis 138 of the power transmission module 130 is inserted into recesses located at opposite side surfaces of the module box 116, and the power transmission module 130 is rotatable.

As shown in FIG. 2, the module box 116 may include a recess corresponding to the stem groove 145a of the stem holder 145 in consideration of the position of the stem 213 of the personal mobility device 200.

The module box 116 may be further provided at an upper surface and a lower surface thereof with recesses, and the recess in the lower surface may be located farther rearward than the recess in the upper surface.

Meanwhile, an elastic portion 139 may be further included to provide force to push the power transmission module 130 in the forward direction such that the power transmission module 130 is in tight contact with the charging module 230. When force is applied at the front surface of the power transmission module 130, the elastic portion 139 may be deformed but provides tension to push the power transmission module 130 in the forward direction.

The present embodiment is an embodiment in which the power transmission module 130 is basically disposed in the vertical direction and the elastic portion 139 is disposed on a rear surface of a lower part of the power transmission module. Generally, since the stem 213 of the personal mobility device 200 is disposed in the state in which a lower part of the stem protrudes, the elastic portion that pushes the rear surface of the lower part of the power transmission module 130 in the forward direction allows the power transmission module 130 to tilt along the inclined surface of the charging module 230 and to return to the original shape thereof when the personal mobility device 200 is removed.

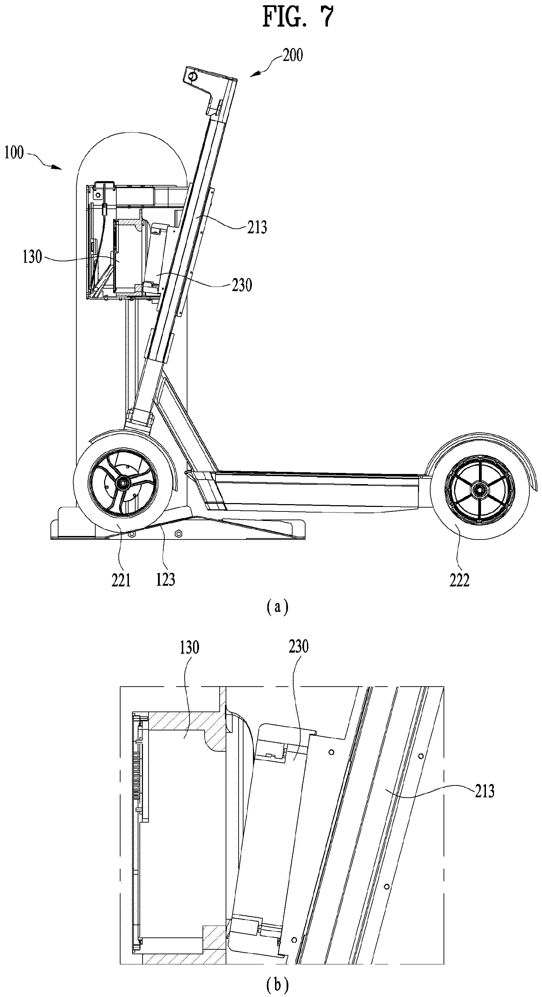

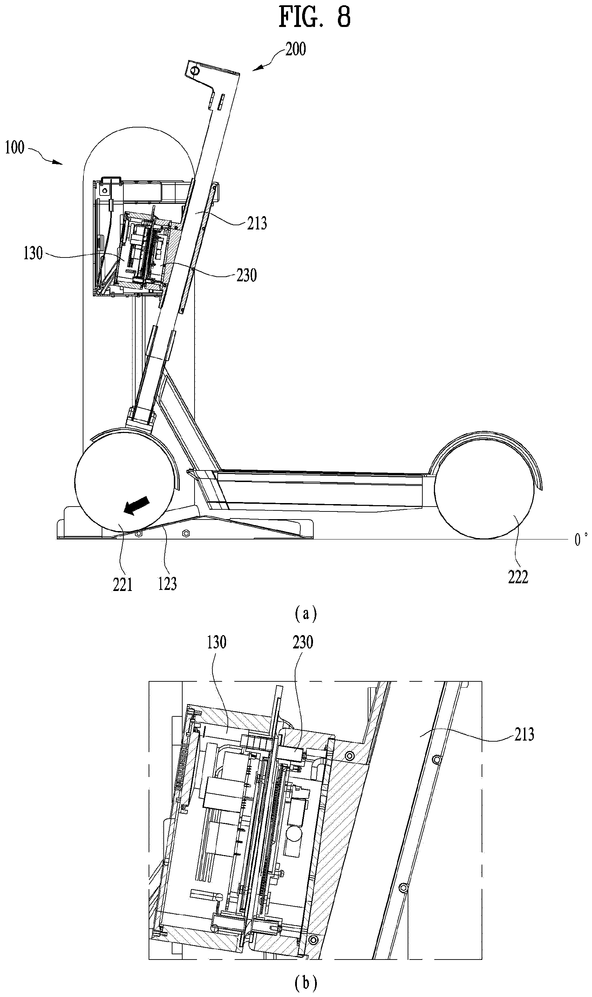

FIGs. 7 and 8 are views showing the state in which the personal mobility device 200 is mounted in the charging station 100 according to the embodiment of the present disclosure. FIG. 7 is a side view of the charging module 230 at the beginning of contact with the power transmission module 130, and FIG. 8 is a sectional view showing the charging module 230 in tight contact with the power transmission module 130.

As shown in FIG. 7, the front wheel 221 of the personal mobility device 200 moves along the second inclined surface 123 toward the rear of the charging station 100, and one point of the charging module 230 contacts one point of the power transmission module 130.

If the angle of the power transmission module 130 does not change, the charging coil 133 of the charging module 230 and the transmission coil 133 of the power transmission module 130 are not aligned with each other and no charging is performed, but the power transmission module 130 of the present disclosure may rotate at an inclination corresponding to the angle of the charging module 230 and the angle may change as shown in (b) of FIG. 8.

As shown in (a) of FIG. 8, the personal mobility device 200 may move a little farther toward the rear of the charging station 100 along the second inclined surface 123, and the power transmission module 130 may be rotated to be aligned with the charging module 230 in tight contact while having the same angle as the charging module, as shown in (b) of FIG. 8.

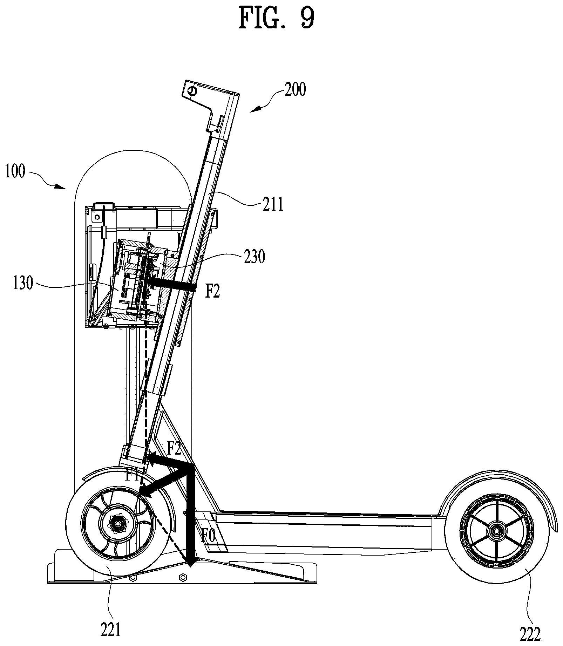

FIG. 9 is a view showing the flow of force by which the charging module 230 of the personal mobility device 200 comes into tight contact with the power transmission module 130 of the charging station 100 according to the embodiment of the present disclosure.

Force F0 oriented in the direction of gravity by the weight of the personal mobility device 200 is changed in direction by the second inclined surface 123, and force F2 is generated in which the charging module 230 presses the power transmission module 130 in the forward-rearward direction by force F 1 changed by the inclined surface.

The power transmission module 130 rotates and tilts in a direction corresponding to the direction of force F2 and comes into tight contact with the charging module 230.

The user may push the personal mobility device 200 only until the front wheel 221 of the personal mobility device 200 is located at the apex 122 of the wheel slope 120, which naturally brings the charging module 230 into tight contact with the power transmission module 130 and charging may occur.

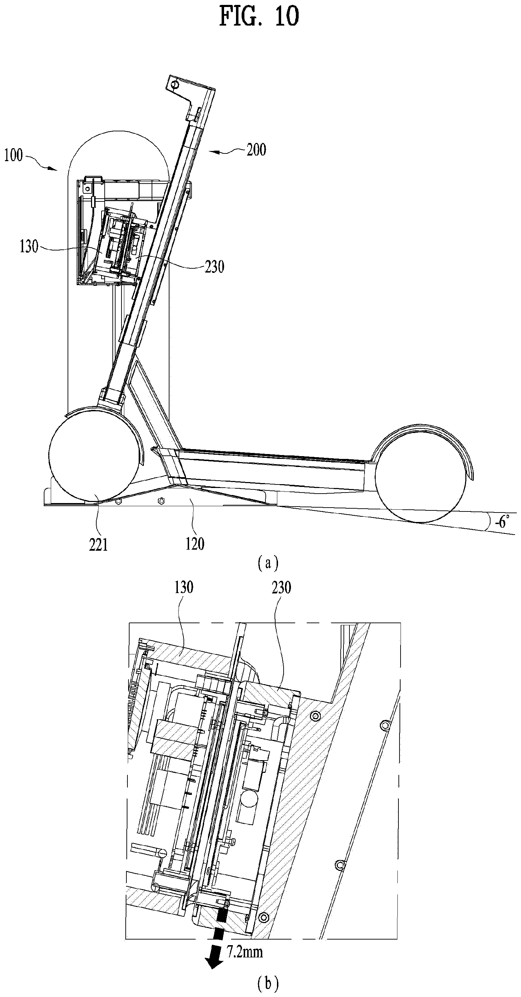

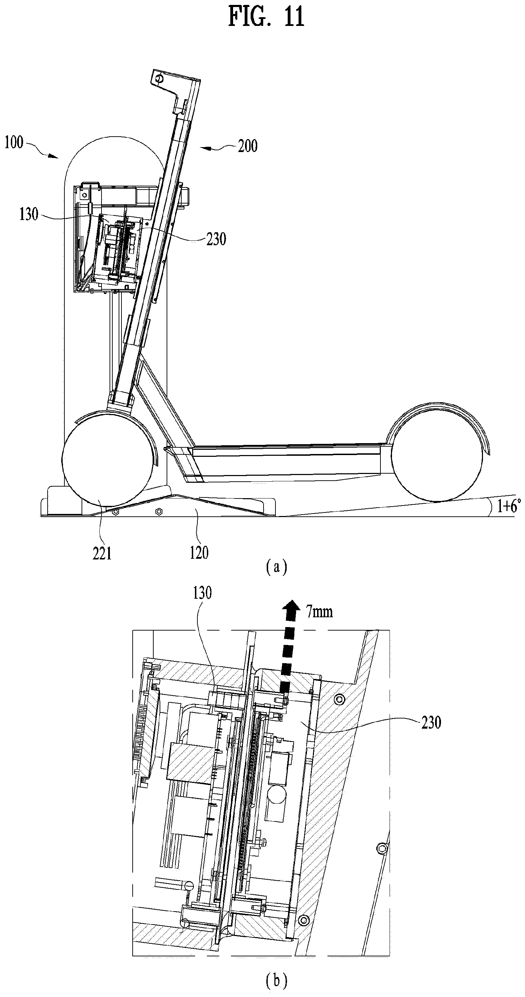

FIGs. 10 and 11 are views showing the disposition of the power transmission module 130 and the charging module 230 in the state in which the personal mobility device 200 is mounted in the charging station 100 according to the embodiment of the present disclosure. If the floor surface on which the rear wheel 222 is located is tilted, the charging module 230 and the power transmission module 130 may be misaligned with each other.

Referring to FIG. 10, if the floor surface on which the rear wheel 222 is located is tilted or depressed so as to be located lower than the charging station 100, the stem 213 of the personal mobility device 200 is further inclined from the vertical direction.

In this case, the position of the front wheel on the second inclined surface 123 is also slightly farther rearward. The power transmission module 130 is tilted slightly more than the normal alignment (see FIG. 8) and the charging module 230 is located lower than the power transmission module 130.

For example, if the floor angle is 6 degrees, the charging module 230 is located about 7.2 mm lower than in (b) of FIG. 8.

Meanwhile, even when the personal mobility device is received in the charging station 100 with the stem 213 disposed to tilt in a direction different from the direction of the wheel slope 120 although the floor surface is not tilted, the tilt of the stem 213 becomes greater, whereby a similar result may occur.

FIG. 11 is a view showing the case where the floor surface at which the rear wheel 222 is located is tilted so as to be higher than the charging station 100. The stem 213 is tilted less and the power transmission module 130 is not tilted as much as in the situation of FIG. 8.

As a result, the charging module 230 is located higher than the power transmission module 130. For example, if the floor angle is 6 degrees, the charging module 230 is located about 7.2 mm farther upward than in (b) of FIG. 8.

In the case of FIGs. 10 and 11, charging is possible within a certain range, and a notification may be provided to the user to dispose the charging module at a correct position if the charging module is tilted beyond an allowable range.

The notification may be provided through the speaker 135 of the power transmission module 130 or a lamp 150 located at an upper side of the frame 110. That is, the lamp 150 may be illuminated blue when the charging module is disposed at the correct position and red when the position is incorrect and charging is not possible.

Whether the charging module 230 is disposed at the correct position may be determined by detecting a change in the magnetic field of the transmission coil 133 of the power transmission module 130. Once there is a change in the magnetic field, it may be determined that the personal mobility device 200 has been received and it may be determined that the charging module 230 is disposed at the correct position to provide sufficient power for charging.

Alternatively, a separate sensor may be used to detect whether the personal mobility device 200 has been received. For example, a pressure sensor may be provided on the wheel slope 120 to determine that the personal mobility device 200 has been received when the personal mobility device 200 is on the wheel slope 120, and may provide charging and notification.

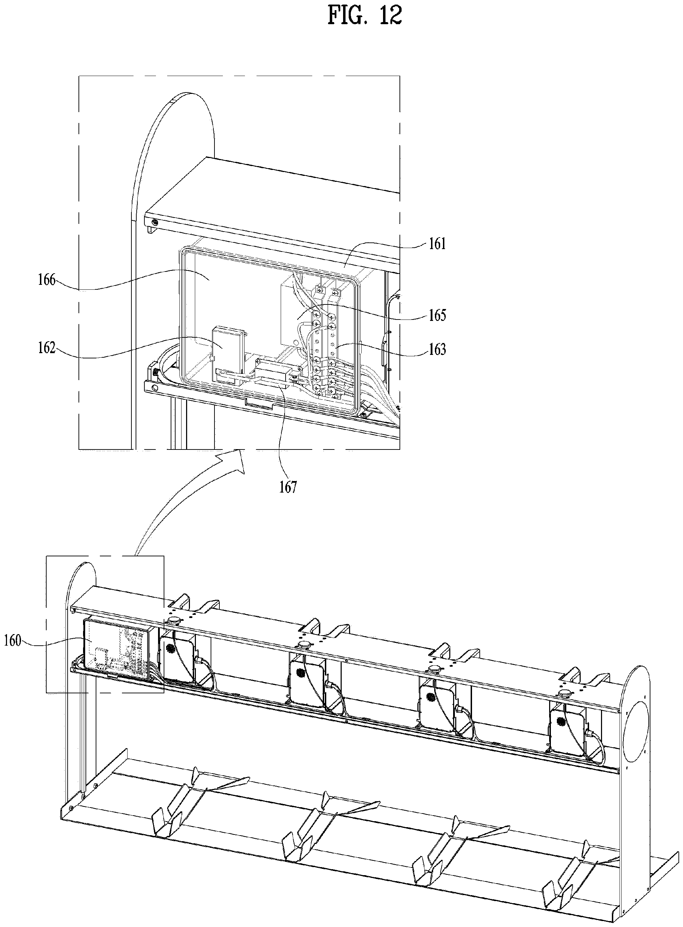

FIG. 12 is a view showing the controller of the charging station according to the embodiment of the present disclosure.

Referring to FIGs. 2 and 12, the controller 160 of the present disclosure is connected to each of the power transmission modules 130 to control the plurality of power transmission modules 130 and may be mounted in the frame 110.

A conventional charging station 100 is configured to receive only one personal mobility device 200, and a controller 160 configured to connect and control a plurality of charging stations 100 is separately provided. The charging stations 100 are connected to each other via a cable extending through the bottoms of the charging stations or exposed on the ground, which presents aesthetic or safety issues.

However, the charging station 100 of the present disclosure has a cable disposed in the frame 110 to control each power transmission module 130. The controller 160 may detect the number of personal mobility devices 200 received in the charging station and transmit available receiving spaces to a server.

The controller 160 may be located in the control box 161 in the frame 110, and may include a power meter 166 configured to measure the power consumed, an AC/DC converter 167 configured to convert the power supplied, and an earth leakage breaker 165 configured to detect earth leakage and cut off power.

Conventionally, the earth leakage breaker is located outside the frame 110 to connect the plurality of charging stations 100, which may easily cause earth leakage, but the earth leakage breaker 165 of the present disclosure is less likely to cause earth leakage even in weather such as rain.

A power distribution module 163 configured to appropriately distribute power to the power transmission modules 130 may be provided, and a communication module 162 for connection with the server may also be provided.

The charging station 100 for personal mobility devices 200 according to the present disclosure may safely store the personal mobility devices 200.

In addition, the present disclosure may facilitate the movement of pedestrians and vehicles, since the personal mobility devices 200 are stored and on standby in a set place.

In addition, the charging station 100 is capable of performing charging simultaneously with storage, whereby the need for separate collection may be eliminated, and the batteries can be charged immediately, whereby the time available for use may be increased.

In addition, the charging station 100 of the present disclosure has the advantage that a plurality of storage portions is integrated to secure rigidity and the charging station is easy to install.

In addition, since a power distribution unit is located in the station, the power distribution unit is not exposed to rain, etc., whereby the risk of electric shock is low and durability is excellent.

The above detailed description should not be construed as being limitative in all terms, but should be considered as being illustrative. The scope of the present invention should be determined by reasonable analysis of the accompanying claims, and all changes in the equivalent range of the present invention are included in the scope of the present invention.

## Claims

1. A charging station for receiving a personal mobility device comprising a front wheel, a rear wheel, and a charging module, the charging station comprising:
a plurality of power transmission modules each comprising a wireless transmission coil;
a frame configured to receive the plurality of power transmission modules;
a controller mounted in the frame; and
a wheel slope located at the frame, the wheel slope being configured to allow the front wheel of the personal mobility device to be seated thereon, wherein
the power transmission module and the charging module are in contact with each other when the front wheel of the personal mobility device is located on the wheel slope.

2. The charging station of claim 1, wherein
the wheel slope comprises:
a first inclined surface extending upward; and
a second inclined surface extending downward from the first inclined surface, and
the power transmission module and the charging module are in contact with each other when the front wheel of the personal mobility device is located on the second inclined surface.

3. The charging station of claim 2, wherein the first inclined surface of the wheel slope has a tapered shape with a large width at a lower part and a small width at an upper part.

4. The charging station of claim 3, wherein the wheel slope further comprises a sidewall formed at a side surface of each of the first inclined surface and the second inclined surface so as to obliquely extend upward and outward.

5. The charging station of claim 2, wherein
the power transmission module comprises:
a module case configured to receive the transmission coil;
a module box hingedly coupled to left and right sides of the module case, the module box being fixed to the frame; and
an elastic portion located between a rear surface of a lower part of the module case and the module box, and
when the personal mobility device is located on the second inclined surface, the elastic portion is compressed and a front surface of the module case is tilted downward.

6. The charging station of claim 1, wherein, when current in the transmission coil changes, the power transmission module determines that the charging module is coupled in place and provides a notification to a user.

7. The charging station of claim 6, wherein the notification is provided visually or audibly using one of a lamp located at an upper part of the frame and a speaker located at the power transmission module.

8. The charging station of claim 1, wherein the power transmission module further comprises a magnet coupled to a ferromagnetic body or a magnet located at the charging module of the personal mobility device.

9. The charging station of claim 1, further comprising a stem holder located above the power transmission module, the stem holder being configured to receive a stem of the personal mobility device.

10. The charging station of claim 1, wherein the frame comprises:
an upper frame extending in a horizontal direction, the upper frame comprising a plurality of receiving portions configured to receive the power transmission modules;
a pair of vertical frames located on opposite sides of the upper frame; and
a lower frame configured to connect the pair of vertical frames to each other, the wheel slope being fixed to the lower frame.

11. The charging station of claim 1, wherein the controller comprises:
a control box located in the frame;
an earth leakage breaker located in the control box, the earth leakage breaker being configured to detect earth leakage and cut off power; and
a power distribution module configured to provide external power to the plurality of power transmission modules.
